Europäisches Patentamt

European Patent Office

Office européen des brevets

(19)

(11) Veröffentlichungsnummer: **0 174 480**
**B1**

(12) **EUROPÄISCHE PATENTSCHRIFT**

(45) Veröffentlichungstag der Patentschrift: **16.05.90**

(51) Int. Cl.⁵: **C 08 F 8/28**

(21) Anmeldenummer: **85109569.5**

(22) Anmeldetag: **30.07.85**

(54) **Thermoplastische, weichmacherhaltige Polyvinylbutyralformmassen.**

(30) Priorität: **10.08.84 DE 3429441**

(43) Veröffentlichungstag der Anmeldung:
**19.03.86 Patentblatt 86/12**

(45) Bekanntmachung des Hinweises auf die
Patenterteilung:
**16.05.90 Patentblatt 90/20**

(84) Benannte Vertragsstaaten:
**DE FR GB IT SE**

(56) Entgegenhaltungen:
**EP-A-0 000 699**
**EP-A-0 088 013**
**DE-A-1 545 141**
**FR-A-1 220 859**

**CHEMICAL ABSTRACTS, Band 91, Nr. 14,**
**Oktober 1979, Seite 30, Nr. 108645g, Columbus,**
**Ohio, US; & JP-A-79 52 195**

(73) Patentinhaber: **HOECHST**
**AKTIENGESELLSCHAFT**
**Postfach 80 03 20**
**D-6230 Frankfurt am Main 80 (DE)**

(72) Erfinder: **Hermann, Hans Dieter, Dr.**
**Am Dachsbau 7**
**D-6232 Bad Soden am Taunus (DE)**
Erfinder: **Fock, Kurt, Dr.**
**Fuchshohl 21**
**D-6232 Bad Soden am Taunus (DE)**
Erfinder: **Fabian, Klaus**
**Drosselweg 11**
**D-6239 Kriftel (DE)**

## Beschreibung

Die Erfindung betrifft thermoplastische, weichmacherhaltige Polyvinylbutyralformmassen, insbesondere hochfeste Folien mit verbesserter Reißfestigkeit und reduzierter Klebrigkeit, Verfahren zu deren Herstellung sowie Verwendung der Folien als verbindende Zwischenschicht bei der Herstellung von Verbundglas.

Polyvinylbutyral wird zusammen mit Weichmacher bekanntlich seit längerer Zeit zur Herstellung von Zwischenschichten in Verbundglas verwendet. Obwohl weichmacherhaltige Polyvinylbutyralfolien bereits einen beachtlichen Brauchbarkeitsgrad erreicht haben und die Herstellung von Verbundlgas hoher Qualität ermöglichen, besteht weiterhin ein erhebliches Interesse an technischen Verbesserungen. Die zur Zeit dominierenden Weichmacher sind vor allem Ester des Triethylenglykols mit aliphatischen Monocarbonsäuren. Sie sind gut mit Polyvinylbutyral mit einem Gehalt an Vinylalkoholeinheiten bis zu 21 Gew.-% und auch darüber verträglich und ergeben Folien mit guten mechanischen Eigenschaften. Die Haftung dieser Folien an Glas ist aber zu hoch und muß durch Zusatz von Antihaftmitteln gezielt auf einen praktikablen Wert herabgesetzt werden, was mitunter Schwierigkeiten bereitet. Zudem sind die genannten Weichmacher nicht einfach zugänglich und daher relativ teuer.

Seit einigen Jahren werden auch Folien hergestellt, die preisgünstigere Weichmacher enthalten. So wurde beispielsweise eine Folie bekannt, die anstelle von Triglykolester ein Gemisch aus Phthalsäure- und Phosphorsäureester enthält. Auch bei dieser Folie ist die reproduzierbare Einstellung der Glashaftung nicht immer einfach. Ein anderer Weg ist die Verwendung von Adipinsäureester, z.B. Dihexyladipat als Weichmacher. Dieser Weichmacher ist nur dann mit Polyvinylbutyral ausreichend verträglich, wenn man den Gehalt an Vinylalkoholeinheiten im Polymerisat auf ca. 18—19 Gew.-% erniedrigt. Folien, welche die übliche Weichmacherkonzentration von ca. 30 Gew.-% im Polymerisat/Weichmachergemisch enthalten, sind bei Verwendung von Dihexyladipat aber zu wenig fest. Man ist daher gezwungen, den Weichmachergehalt zu reduzieren. Dies führt zwar zu Folien von guter Qualität, jedoch fließen diese bei der Herstellung relativ schwer, d.h. sie erfordern einen hohen Energieaufwand.

Ähnliches gilt, wenn man die besonders leicht zugänglichen Phthalsäureester als Weichmacher verwendet. Auch hier ist man gezwungen, Polyvinylbutyrale mit niedrigem Gehalt an Vinylalkoholeinheiten einzusetzen, was zu technisch wenig brauchbaren Folien mit verminderter Festigkeit und erhöhter Klebrigkeit führt.

Es besteht daher ein Bedarf an Folien aus weichgemachtem Polyvinylbutyral, die leicht verarbeiter, hochfest und nicht zu klebrig sind, die als Weichmacher Adipinsäureester und/oder Phthalsäureester enthalten können und deren Haftung an Glas nicht aufwendig eingestellt werden muß oder zumindest leicht einstellbar ist.

Unter Überwindung der bekannten Probleme und Nachteile wurde nun überraschenderweise ein Verfahren zur Herstellung von thermoplastischen, weichmacherhaltigen Polyvinylbutyralformmassen durch Acetalisierung von Polyvinylalkohol mit n-Butyraldehyd in wäßriger Phase in Gegenwart eines sauren Katalysators und gegebenenfalls einer emulgierend wirkenden organischen Sulfonsäure sowie Nachbehandlung des Polyvinylbutyrals unter Acetalisierungsbedingungen bei erhöhter Temperatur in Gegenwart einer emulgierend wirkenden Verbindung, Isolierung bzw. Reinigung des Polyvinylbutyrals und gegebenenfalls Zumischen üblicher Zusätze sowie Vermischen des gegebenenfalls getrockneten Produktes mit bis zu 40 Gew.-% Weichmacher, bezogen auf das Polymerisat/Weichmachergemisch, und Ausformung gefunden, das dadurch gekennzeichnet ist, daß zur Acetalisierung ein assoziationsfähiger Polyvinylalkohol, der weniger als 1 Gew.-% Vinylacetateinheiten (VAC) enthält, in assoziiertem Zustand in wäßriger, fließfähiger Lösung eingesetzt wird und die Acetalisierung in Gegenwart von 0,1 bis 5 Gew.-%, bezogen auf die wäßrige Phase, einer Mineralsäure anfänglich bei einer Temperatur unterhalb von 20°C und später von 20 bis zu 70°C erfolgt, die anschließende Nachbehandlung des Polyvinylbutyrals in Gegenwart einer emulgierend wirkenden organischen Sulfonsäure mit 8 bis 30 C-Atomen oder eines ihrer Salze bei 50 bis 70°C während 0,5 bis 10 Stunden durchgeführt und als Weichmacher

a) ein Ester der Phthalsäure mit einem linearen oder verzweigten $C_6$—$C_{10}$-Alkohol oder Gemischen dieser Alkohole und/oder

b) ein Ester der Adipinsäure mit einem linearen oder verzweigten $C_6$—$C_{10}$-Alkohol oder Gemischen dieser Alkohole in einer Menge von insgesamt 20 bis 40 Gew.-%, bezogen auf die Mischung, eingesetzt wird.

Der für die Acetalisierung eingesetzte Polvinylalkohol enthält erfindungsgemäß weniger als 1 Gew.-%, vorzugsweise 0 bis 0,5 Gew.-%, Vinylacetateinheiten.

Eine besonders bevorzugte Verfahrensvariante besteht darin, daß man von Polyvinylalkohol ausgeht, der mehr als 1 Gew.-%, vorzugsweise 1 bis 5 Gew.-%, Vinylacetateinheiten enthält, und man diesen Polyvinylalkohol in wäßriger Lösung bei erhöhter Temperatur, vorzugsweise zwischen 50 und 100°C, mit einer stöchiometrischen Menge Alkali behandelt, bis der gewünschte Gehalt an Vinylacetateinheiten erreicht ist, und dann den solchermaßen verseiften Polyvinylalkohol in der wäßrigen Lösung in assoziiertem Zustand acetalisiert.

Es können beliebige Polyvinylalkohole als Ausgangskomponenten verwendet werden, sofern sie in wäßriger Lösung Assoziate bilden können.

Der assoziationsfähige Polyvinylalkohol kann vor der Acetalisierung dadurch in den erforderlichen

# EP 0 174 480 B1

assoziierten Zustand gebracht werden, daß man seine wäßrige Lösung vorzugsweise mindestens 10 Minuten auf einer niedrigen Temperatur, vorzugsweise unterhalb von 40°C, insbesondere bei 15 bis 20°C, hält.

Ob ein erfindungsgemäß einzusetzendes Assoziat vorliegt, läßt sich leicht daran erkennen, daß die wäßrige Polyvinylalkohollösung nach Erwärmen auf eine Temperatur von 90 bis 100°C und Abkühlen auf Zimmertemperatur beim anschließenden Stehen einen Viskositätsanstieg zeigt.

Eine weitere Bedingung besteht darin, daß die wäßrigen Lösungen des assoziierten Polyvinylalkohols unter Acetalisierungsbedingungen noch fließfähig sind.

Aus der EP—PS 0000 699 ist andererseits zwar bekannt, daß man die zwischenmolekularen Kräfte im Polyvinylbutyral verstärken kann, wenn man das Polyvinylbutyral in wäßriger Phase unter Acetalisierungsbedingungen in Gegenwart von 0,01 bis 0,5 Gew.-%, bezogen auf Polyvinylbutyral, einer emulgierend wirkenden organischen Sulfonsäure bei erhöhter Temperatur mehrere Stunden nachbehandelt. Dieses Verfahren erwies sich jedoch nicht als geeignet zur Lösung des vorliegenden Problems, und beispielsweise auch eine Erhöhung der Konzentration der emulgierend wirkenden organischen Sulfonsäure bei der Nachbehandlung führte nicht zum Erfolg.

Das Ziel kann überraschenderweise aber dadurch erreicht werden, daß als Ausgangsmaterial assoziationsfähiger Polyvinylalkohol verwendet, dieser vor der Acetalisierung in einen assoziierten Zustand gebracht und anschließend unter solchen Bedingungen mit n-Butyraldehyd umgesetzt wird, unter denen die Assoziate nicht oder höchstens teilweise wieder aufgespalten werden. Während der erfindungsgemäßen Acetalisierungsreaktion des Polyvinylalkohols im assoziierten Zustand in wäßriger Phase bleiben überraschenderweise die Wasserstoffbrückenbindungen zwischen den assoziierten Polyvinylalkoholmolekülen offensichtlich, und zwar gegebenenfalls bis zu Temperaturen von maximal 50 bis 70°C, erhalten und bewirken in dem resultierenden Polvinylbutyral eine dauerhafte partielle physikalische Vernetzung.

Die Zunahme der Wasserstoffbrückenbindungen kann beispielsweise an einer Verbreiterung de OH-Bande im Infrarotspektrum erkannt werden.

Wie schon erwähnt, kann die erforderliche Assoziation des Polyvinylalkohols ganz einfach dadurch erreicht werden, daß man die wäßrige Lösung eines Polyvinylalkohols, der höchstens 1 Gew.-%, vorzugsweise höchstens 0,5 Gew.-%, Vinylacetateinheiten enthält, bei Temperaturen unter 50°C bis zu 24 Stunden, vorzugsweise bis zu 2 Stunden, stehen läßt.

Besonders bevorzugt ist eine Ausführungsform, bei der man von einem Polyvinylalkohol ausgeht, der mehr als 1 Gew.-%, vorzugsweise 1 bis 5 Gew.-%, Vinylacetateinheiten enthält und der in wäßriger Lösung mit stöchiometrischen Mengen an Alkali, wie beispielsweise Natronlauge oder Kalilauge, vorzugsweise zwischen 50 und 100°C, so lange, vorzugsweise 5—60 Minuten, behandelt wird, bis der Gehalt an Vinylacetateinheiten im Polyvinylalkohol auf den gewünschten Wert, vorzugsweise auf höchstens 0,8 Gew.-%, herabgesetzt ist. Falls erforderlich, läßt man die verseifte Polyvinylalkohollösung, vorzugsweise bei Temperaturen zwischen 0 und 40°C, bis zu 24 Stunden oder länger stehen, damit eine ausreichende Assoziation des Polymerisats erreicht wird. Besonders bei vollständiger Verseifung kann die Lagerung aber auch auf bis zu 5 bis 10 Minuten reduziert werden. Es ist auch nicht immer erforderlich, den gesamten Polyvinylalkohol, der mit Butyraldehyd umgesetzt werden soll, zu verseifen. Es genügt manchmal schon, wenn mehr als 20 Gew.-% des Polyvinylalkohols vorzugsweise weniger als 0,5 Gew.-% Vinylacetateinheiten enthalten. Jedoch sollte auch in diesen Fällen der durchschnittliche Gehalt an Vinylacetateinheiten im gesamten zur Acetalisierung vorgesehenen Polyvinylalkohol unter 1 Gew.-% liegen, bezogen auf die Gesamtmenge des Polvyinylalkohols. Anschließend an die Verseifung und gegebenenfalls Lagerung der wäßrigen Polyvinylalkohollösung erfolgt die Acetalisierung des Polyvinylalkohols in wäßriger Phase unter üblichen Bedingungen, wobei der Polyvinylalkohol vorzugsweise zunächst unterhalb 20°C, später oberhalb 20°C mit n-Butyraldehyd in Gegenwart von 0,1 bis 5 Gew.-% einer Mineralsäure (bezogen auf die wäßrige Phase), wie z.B. Salzsäure, Schwefelsäure oder Salpetersäure, umgesetzt wird.

Die Nachbehandlung des Polyvinylbutyrals mit einer emulgierend wirkenden organischen Sulfonsäure, die sich vorzugsweise direkt an die Acetalisierung anschließt, erfolgt entsprechend der aus der EP—PS 0000 699 bekannten Methode.

Hierzu wird das Polyvinylbutyral in feinverteilter Form — die Korngröße sollte vorzugsweise zu 90% unter 1 mm liegen — in wäßriger Phase unter Acetalisierungsbedingungen 0,5 bis 10 Stunden, vorzugsweise 1 bis 7 Stunden, bei Temperaturen von 50 bis 70°C in Gegenwart einer emulgierend wirkenden organischen Sulfonsäure mit vorzugsweise 8 bis 30 Kohlenstoffatomen oder eines Salzes einer solchen Sulfonsäure gerührt. Entsprechend den üblichen Bedingungen der Acetalisierung sind ferner ca. 0,1 bis 5 Gew.-% (bezogen auf die wäßrige Phase) Mineralsäure anwesend.

Wie bei dem Verfahren der EP—PS 0000 699 kann die erforderliche Konzentration an emulgierend wirkender Sulfonsäure bis zu 1 Gew.-%, vorzugsweise 0,01 bis 0,5 Gew.-%, insbesondere 0,05 bis 0,4 Gew.-% (bezogen auf Polyvinylbutyral) betragen. Das behandelte Polymerisat sollte einen Anteil von 15 bis 21 Gew.-%, vorzugsweise 16 bis 20 Gew.-%, an Vinylalkoholeinheiten enthalten, da vorzugsweise in diesem Bereich eine ausreichende Weichmacherverträglichkeit des Polyvinylbutyrals gewährleistet ist. Der Anteil an Vinylacetateinheiten im Polvyinylbutyral sollte 0 bis 1 Gew.-%, vorzugsweise 0 bis 0,5 Gew.-%, betragen. Bei der Nachbehandlung ist, entsprechend den üblichen Bedingungen der Acetalisierung, soviel n-Butyraldehyd anwesend, daß die angegebenen Gehalte an Vinylalkoholeinheiten nicht über- oder

3

unterschritten werden. Anschließend an die Nachbehandlung wird das Polyvinylbutyral aus der wäßrigen Phase abgetrennt, in üblicher Weise neutral gewaschen und vorzugsweise nach bekannten Methoden mit einer geringeren Menge an Alkali versetzt und getrocknet. Die Viskosität des solchermaßen nachbehandelten Polyvinylbutyrals soll zwischen 10 und 200 mPa·s, vorzugsweise zwischen 50 und 150 mPa·s, liegen, gemessen nach DIN 53015 an einer 5 gew.-%igen Lösung in Ethanol bei 23°C.

Die verwendeten Weichmacher werden in einer Konzentration von vorzugsweise 20 bis 40 Gew.-%, insbesondere 25 bis 35 Gew.-%, bezogen auf die Mischung, eingesetzt.

Als Weichmacher sind erfindungsgemäß geeignet:

a) Ester der Phthalsäure mit linearen oder verzweigten aliphatischen Alkoholen mit 6 bis 10 C-Atomen, wie z.b. Hexanol, Octanol oder Isodecanol sowie Gemischen dieser Alkohole. In untergeordneten Mengen, vorzugsweise unter 10 Gew.-% (bezogen auf den Weichmacher), können auch Phthalsäureester höherer oder niedriger Alkohole anwesend sein.

b) Ester der Adipinsäure mit linearen oder verzweigten aliphatischen Alkoholen mit 6 bis 8 C-Atomen, wie z.B. Hexanol, Octanol sowie Gemischen dieser Alkohole. In untergeordneten Mengen, vorzugsweise unter 10 Gew.-%, (bezogen auf den Weichmacher), können auch Ester der Adipinsäure mit höheren oder niedrigeren Alkoholen vorhanden sein.

Mit steigender Kettenlänge der Alkoholkomponente nimmt die Verträglichkeit der Weichmacher mit Polyvinylbutyral ab. Andererseits nimmt die Verträglichkeit eines bestimmten Weichmachers mit abnehmendem Gehalt an Vinylalkoholeinheiten im Polyvinylbutyral zu. An Hand dieser Eigenschaftsmerkmale ist es leicht möglich, die optimale Zusammensetzung eines Polymerisat/ Weichmachergemisches zu ermitteln. Dabei ist es wünschenswert, solche Polymerisat/ Weichmachergemische einzusetzen, bei denen die Verträglichkeitsgrenze möglichst nahe liegt, ein Ausschwitzen des Weichmachers aber mit Sicherheit vermieden wird.

Das Mischungsverhältnis der unter a) und b) genannten Weichmacherkomponenten ist an sich nicht kritisch. Vorzugsweise beträgt das Gewichtsverhältnis von a) : b) = 100 bis 90:0 bis 10, oder 0 bis 10:100 bis 90. Auch die bekannten Ester des Tri- oder Tetraethylenglykols mit aliphatischen $C_6$—$C_8$-Carbonsäuren, Sebazinsäureester, Phosphorsäureester u.a können in untergeordneten Mengen, vorzugsweise zu weniger als 10 Gew.-%, bezogen auf das weichmacherhaltige Polymerisat, zugesetzt werden.

Vor oder bei der Verarbeitung des weichgemachten Polyvinylbutyrals zu Formkörpern können Substanzen zugesetzt werden, die die Mischung gegen Abbau stabilisieren, z.B. geringe Mengen an Alkali oder an alkalisch reagierenden Salzen, ferner Oxidationsstabilisatoren, wie z.B. die in 2-, 4- und/oder 6-Stellung substituierten Phenole, Bisphenole oder Terpenphenole.

Schließlich können die Mischungen noch Zusätze enthalten, die die Haftung der Folien aneinander oder an Glas beeinflussen, wie z.B. Salze von Carbonsäuren, Fluoride, Lecithine oder Alkylenharnstoffe.

Sowohl die genannten Stabilisatoren als auch die Zusätze zur Beeinflussung der Haftung werden üblicherweise in Mengen von 0,001 bis 1 Gew.-%, bezogen auf die Gesamtmischung, zugesetzt.

Polyvinylbutyral, Weichmacher und gegebenenfalls Zusätze werden in bekannter Weise durch Zusammenrühren und gegebenenfalls Stehenlassen der Mischung, oder durch Verkneten oder Verwalzen bei erhöhter Temperatur oder auch unmittelbar bei der Verarbeitung auf dem Kalander oder im Extruder gemischt und in üblicher Weise, vorzugsweise durch Extrusion, zu thermoplastischen Formkörpern, vorzugsweise zu einer 0,05 bis 3 mm, insbesondere 0,3 bis 2 mm dicken Folie verarbeitet.

Die Herstellung von Glasverbunden mit den erfindungsgemäß hergestellten Verbundfolien kann nach üblichen Methoden, beispielsweise durch Verpressen zwischen zwei Glasscheiben bei 120 bis 160°C und 5 bis 20 bar, erfolgen.

Aus assoziiertem Polyvinylalkohol erfindungsgemäß hergestellte weichmacherhaltige, thermoplastische Polyvinylbutyralformmassen und Folien, insbesondere Folien hoher Festigkeit mit verbesserter Reißfestigkeit und reduzierter Klebrigkeit, sind an sich neu und als solche ebenfalls Gegenstand der Erfindung.

Weitere Gegenstände der Erfindung sind auch die Verwendung erfindungsgemäßer weichmacherhaltiger thermoplastischer Polyvinylbutyralformmassen in Form von thermoplastischen Folien mit verbesserter Reißfestigkeit und reduzierter Klebrigkeit zur Herstellung von Glasverbunden, sowie Glasverbunde, welche die letzteren Folien als Verbundschicht enthalten.

Die Erfindung wird durch die nachfolgenden Beispiele näher erläutert.

Beispiel 1

a) erfindungsgemäß

1000 Gewichtsteile einer 10 gew.-%igen Lösung von Polyvinylalkohol (=PVAl) (Polymeriserationsgrad $P_n$ ca. 1400, 1,8 Gew.-% Vinylacetateinheiten) werden bei 90°C 30 Minuten lang in Gegenwart von 9,3 Gewichtsteilen 10 gew.-%iger Natronlauge gerührt. Durch diese Behandlung wird der Gehalt an Vinylacetateinheiten im Polyvinylalkohol auf 0,1 Gew.-% herabgesetzt. Die Lösung wird auf 16°C abgekühlt und mit 105 Gewichtsteilen konzentrierter Salzsäure sowie 0,6 Gewichtsteilen Natriumdodecylbenzolsulfonat versetzt. Nach einer vorausgegangenen Abkühlungszeit von 30 Minuten werden zu dieser Lösung bei 16°C in 30 Minuten 65 Gewichtsteile n-Butyraldehyd kontinuierlich zugegeben. Es wird noch 30 Minuten bei 16°C gerührt, dann wird der Ansatz in 2 Stunden auf 52°C erhitzt und noch 3 Stunden bei dieser Temperatur gerührt. Anschließend wird auf Zimmertemperatur abgekühlt,

das abgeschiedene Polyvinylbutyral (=PVB) filtriert und mit Wasser neutral gewaschen. Daraufhin wird das Polymerisat mit 740 Gewichtsteilen Wasser und 2,5 Gewichtsteilen 10 gew.-%iger Natronlauge 1 Stunde bei 60°C gerührt, filtriert und bei 40°C im Vakuum getrocknet. Das Polymerisat wird mit 30 Gew.-% (bezogen auf die Mischung) Di-2-ethylhexylphthalat vermischt und zu einer 0,8 mm starken Folie extrudiert. Einige Eigenschaften des Polymerisats und der daraus hergestellten Folie sind in Tabelle 1 angegeben.

b) (Vergleich)

Versuch a) wird wiederholt. Jedoch wird im Gegensatz zu a) in Abwesenheit von Dodecylbenzolsulfonat acetalisiert. Im übrigen unterscheiden sich die Herstellung des Polymerisats und die Verarbeitung zur Folie nicht von a). Einige Eigenschaften des Polymerisats und der daraus hergestellten Folie sind in Tabelle 1 angegeben.

c) (Vergleich)

Versuch a) wird wiederholt. Wie bei b) wird dabei in Abwesenheit von Dodecylbenzolsulfonat acetalisiert. Außerdem wird der zur Acetalisierung eingesetzte Polyvinylalkohol nicht mit Alkali vorbehandelt. Im übrigen unterscheiden sich die Herstellung des Polymerisats und die Verarbeitung zu Folie nicht von a). Einige Eigenschaften des Polymerisats und der daraus hergestellten Folie sind in Tabelle 1 angegeben.

TABELLE 1

| Beispiel 1 | Polymerisat | | | Folie | | | | |
|---|---|---|---|---|---|---|---|---|
| | Vinylacetateinheiten im Ausgangs-PVAl (Gew.-%) | Na-dodecylbenzolsulfonat bei Acetalisierung (Gew.-T) | Vinylalkoholeinheiten im PVB (Gew.-%) | Schmelzindex | | Reiß-festig-keit [3] $(N/mm^2)$ | Festigkeit bei 100% Dehnung [3] $(N/mm^2)$ | Verträg-lichkeit mit Weich-macher |
| | | | | $i_2$ 190°C [1] (g/10 Min.) | $i_{20}$ 80°C [2] (mg/Std.) | | | |
| a) (erfin-dungsgemäß) | 0,1 | 0,6 | 16,1 | 3,1 | 450 | 24 | 2,1 | ja |
| b) (Vergleich) | 0,1 | 0 | 17,0 | 2,0 | 620 | 24 | 1,5 | ja |
| c) (Vergleich) | 1,8 | 0 | 16,6 | 3,2 | 1560 | 19 | 1,3 | ja |

1) Bestimmung nach DIN 53735 bei 190°C unter 2,16 kg Last
2) Bestimmung nach DIN 53735 bei 80°C unter 21,6 kg Last
3) Bestimmung nach DIN 53455 nach Klimatisierung bei 23°C und 50% rel. Feuchte, Zuggeschwindigkeit 20 cm/Min., Einspannlänge 50 mm, Breite des Meßstreifens 15 mm.

Das Beispiel 1 zeigt, daß das erfindungsgemäße Polymerisat a) gegenüber den Vergleichsprodukten b) und c) Folien mit höherer Festigkeit ergibt, die bei 80°C eine günstigere Fließfähigkeit aufweisen.

## Beispiel 2

a) Erfindungsgemäß

Ein Polyvinylalkohol mit einem Polymerisationsgrad $P_n$ ca. 1300 und einem Gehalt an Vinylacetateinheiten von 2,2 Gew.-% wird in 10 gew.-%iger Lösung bei 80°C durch Zugabe von Natriumhydroxid vollständig verseift. Anschließend werden 1000 Gewichtsteile dieser Lösung auf 14°C gekühlt und mit 110 Gewichtsteilen 36 gew.-%iger Salzsäure sowie 0,65 Gewichtsteilen pentadecylsulfonsaurem Natrium versetzt. In 20 Minuten werden zu dieser Lösung 63,7 Gewichtsteile n-Butyraldehyd kontinuierlich zugegeben. Es wird noch eine Stunde bei 14°C gerührt, dann wird der Ansatz in 2,5 Stunden auf 60°C erwärmt und 3 Stunden bei dieser Temperatur gehalten. Das Polymere wird anschließend wie in Beispiel 1 angegeben aufgearbeitet.

b) (Vergleich)

In gleicher Weise wie bei Beispiel 2a) wird ein Polyvinylbutyral aus demselben Ausgangspolyvinylalkohol hergestellt. Im Gegensatz zu 2a) wird dieser Polyvinylalkohol jedoch nicht nachverseift. Außerdem werden bei der Acetalisierung 63,0 Gewichtsteile n-Butyraldehyd eingesetzt.

Die Polymerisate aus 2a) und 2b) werden jeweils zusammen mit 30 Gew.-% eines Weichmachers (bezogen auf die Mischung) zu einer 0,8 mm starken Folie extrudiert. Der Weichmacher besteht aus einem Gemisch gleicher Gewichtsteile Dihexyl-, Dioctyl- und Didecylphthalat. Einige Eigenschaften der Polymerisate und der daraus hergestellten Folien sind in Tabelle 2 angegeben.

TABELLE 2

| Beispiel 2 | Polymerisat | | | Folie | | |
|---|---|---|---|---|---|---|
| | Vinylacetateinheiten im Ausgangs-PVAL (Gew.-%) | Natriumalkansulfonat bei Acetalisierung (Gew.-T) | Vinylalkoholeinheiten im PVB (Gew.-%) | Schmelzindex | | Festigkeit bei 100% Dehnung (N/mm$^2$) |
| | | | | $i_{10}$ 150°C [2] (g/10 Min.) | $i_{20}$ 80°C[1] (mg/Std.) | |
| a) (erfindungsgemäß) | <0,1 | 0,6 | 17,2 | 4,2 | 170 | 3,0 |
| b) (Vergleich) | 2,1 | 0,6 | 17,0 | 7,6 | 610 | 2,3 |

1) Bestimmung nach DIN 53735 bei 80°C unter 21,6 kg Last

2) Bestimmung nach DIN 53735 bei 150°C unter 10 kg Last

Das Beispiel 2 zeigt, daß zusätzlich zur verstärkenden Wirkung des Alkansulfonats durch Nachverseifung des Polyvinylalkohols eine Verstärkung der zwischenmolekularen Kräfte im Polyvinylbutyral erreicht wird, was durch Abnahme der Fließfähigkeit und Zunahme der Festigkeit der Folien erkennbar wird.

### Beispiel 3

In gleicher Weise wie in Beispiel 2 beschrieben, wird ein acetylgruppenfreies Polyvinylbutyral hergestellt und unter Acetalisierungsbedingungen mit 0,4 Gew.-Teilen Natriumpentadecylsulfonat pro 100 Gew.-Teile Polyvinylbutyral 5 Stunden bei 60°C behandelt. Es resultiert ein Polymerisat mit 17,3 Gew.-% Vinylalkoholeinheiten. Eine Mischung aus 70 Gewichtsteilen dieses Polyvinylbutyrals mit 30 Gewichtsteilen Dioctylphthalat wird zu einer 0,9 mm starken Folie verpreßt. Aus der Folie werden mit 3 mm starkem Floatglas in bekannter Weise 30 × 30 cm große Glasverbunde hergestellt. Die klaren Verbunde ergeben im Falltest nach DIN 52306 mit einer 2,26 kg schweren Stahlkugel eine mittlere Bruchhöhe von 9,1 m.

### Beispiel 4

Ein Polyvinylbutyral mit einem Polymerisationsgrad $P_n$ ca. 1400 und einem Gehalt an Vinylacetateinheiten von unter 0,1 Gew.-% wird unter Acetalisierungsbedingungen 3 Stunden bei 55°C in Gegenwart von 0,2 Gew.-% Natriumdodecylbenzolsulfonat (bezogen auf das Polymerisat) nachbehandelt. Das resultierende Polymerisat hat einen Gehalt an Vinylalkoholeinheiten von 17,1 Gew.-%. 0,8 mm starke Folien aus diesem Polymerisat, die 30 Gew.-% Dihexylphthalat als Weichmacher enthalten, haben eine Reißfestigkeit (gemessen wie in Beispiel 1 angegeben) von 21 N/mm². Wird dasselbe Polymerisat zum Vergleich mit 29 Gew.-% Triethylenglykol-bis-heptansäureester weichgemacht, so hat die aus diesem Material hergestellte 0,8 mm starke Folie lediglich eine Reißfestigkeit von 15 N/mm².

### Beispiel 5

In gleicher Weise wie in Beispiel 1 beschrieben werden zwei Polyvinylbutyrale mit dem Polymerisationsgrad $P_n$ ca. 1400 hergestellt. Die Zusammensetzung der Polymerisate sowie die Konzentration an Natriumdodecylbenzolsulfonat bei der Nachbehandlung ist in der folgenden Tabelle 3 angegeben. Die beiden Polymerisate werden zu 0,8 mm starken Folien verarbeitet, die als Weichmacher 29 Gew.-% Di-n-hexyladipat enthalten. Verschiedene Eigenschaften dieser Folien sind ebenfalls in Tabelle 3 beschrieben.

TABELLE 3

| Beispiel 5 | Polymerisat | | | Folie | | | |
|---|---|---|---|---|---|---|---|
| | Vinylacetateinheiten im Ausgangs-PVAL (Gew.-%) | Natriumsulfonat bei Acetalisierung (Gew.-T) | Vinylalkoholeinheiten im PVB (Gew.-%) | Schmelzindex $i_2$ 190°C [1] (g/10 Min.) | $i_{20}$ 80°C [2] (mg/Std.) | Festigkeit bei 100% Dehnung [3] (N/mm$^2$) | Folienklebrig-keit [4] (sec.) |
| a) (erfin-dungsgemäß) | 0,2 | 0,35 | 16,9 | 4,8 | 215 | 1,5 | 600 |
| b) (Vergleich) | 1,9 | 0,35 | 17,0 | 4,8 | 1075 | 1,1 | 800 |

1) Bestimmung nach DIN 53735 bei 190°C unter 2,16 kg Last
2) Bestimmung nach DIN 53735 bei 80°C unter 21,6 kg Last
3) Bestimmung nach DIN 53455 nach Klimatisierung bei 23°C und 50% rel. Feuchte, Zuggeschwindigkeit 20 cm/Min., Einspannlänge 50 mm, Breite des Meßstreifens 15 mm.
4) Bestimmung nach EP—PS 0000 699, Seite 5 (EP—A—0 000 699, Seite 12).

# EP 0 174 480 B1

Das Beispiel 5 zeigt bei dem erfindungsgemäß hergestellten und weichgemachten Polyvinylbutyral 5a) gegenüber dem Polyvinylbutyral des Vergleichs 5b) nicht nur eine günstige Veränderung des Fließens bei 80°C und eine Erhöhung der Festigkeit, sondern auch eine Verringerung der Klebrigkeit.

### Beispiel 6

Zwei Polyvinylbutyrale mit einem Polymerisationsgrad $P_n$ ca. 1350, die aus demselben Polyvinylalkohol, der einmal wie in Beispiel 1 beschrieben nachverseift und einmal nicht nachverseift wurde und die im übrigen unter denselben Bedingungen hergestellt worden sind, werden unter Acetalisierungsbedingungen 5 Stunden bei 60°C in Gegenwart von 0,38 Gew.-% (bezogen auf PVB) Octadecylsulfonsäure nachbehandelt. Nach dieser Behandlung enthält das erfindungsgemäße Polymerisat 6a) einen Gehalt an Vinylalkoholeinheiten von 18,1 Gew.-% und einen Gehalt an Vinylacetateinheiten von weniger als 0,1 Gew.-%.

Beim Vergleichsprodukt 6b) liegen die entsprechenden Werte bei 17,9 bzw. 1,7 Gew.-%. Aus beiden Polymerisaten werden 0,8 mm starke Folien zusammen mit 26 Gew.-% (bezogen auf die Folie) eines Weichmachers hergestellt, der sich aus 8 Gewichtsteilen Di-n-hexyladipat und 2 Gewichtsteilen Di-2-ethylhexyladipat zusammensetzt. Die aus dem erfindungsgemäßen Polymerisat 6a) hergestellte Folie hat eine Klebrigkeit von 400 sec, während die Vergleichsfolie 6b) mit 1500 sec. wesentlich stärker klebt.

### Beispiel 7

Dieselben Polyvinylbutyrale 6a) und 6b) wie in Beispiel 6 hergestellt, werden anschließend an die dort beschriebene Nachbehandlung mit 30 Gew.-% (bezogen auf die Mischung) Di-n-hexylphthalat weichgemacht und zu jeweils einer 0,8 mm starken Folie verarbeitet. Die Folien haben folgende Eigenschaften:

### TABELLE 4

| Beispiel 7 | Folie | | |
|---|---|---|---|
| | Schmelzindex [1]<br>$i_2$ 190°C<br>(g/10 Min.) | Reißfestigkeit [3]<br>(N/mm²) | Folienklebrigkeit [4]<br>(sec.) |
| a) (erfin-dungsgemäß) | 2,4 | 29,0 | 1900 |
| b) (Vergleich) | 3,1 | 27,0 | 6000 |

1) Bestimmung nach DIN 53735 bei 190°C unter 2,16 kg Last
3) Bestimmung nach DIN 53455 nach Klimatisierung bei 23°C und 50% rel. Feuchte, Zuggeschwindigkeit 20 cm/Min., Einspannlänge 50 mm, Breite des Meßstreifens 15 mm.
4) Bestimmung nach EP—PS 0000 699, Seite 5.

### Beispiel 8

Nach der in Beispiel 1 beschriebenen Methode werden 3 verschiedene Polyvinylbutyrale aus demselben Polyvinylalkohol hergestellt, der einen Polymerisationsgrad $P_n$ ca. 1450 und einen Gehalt an Vinylacetateinheiten von 1,6 Gew.-% hat.

Ein erfindungsgemäßes Polymerisat 8a) wird dadurch erhalten, daß vor Beginn der Acetalisierung durch Zusatz von NaOH wie in Beispiel 1 beschrieben der Gehalt an Vinylacetateinheiten auf weniger als 0,1 Gew.-% gesenkt wird.

Die Reaktion wird durch Zugabe von n-Butyraldehyd zur salzsauren Polyvinylalkohollösung in gleicher Weise wie in Beispiel 1 beschrieben in Gang gesetzt. Der Temperaturverlauf bei der Acetalysierung ist 1 Stunde bei 16°C, Erwärmen in 2 Stunden auf 60°C und 5 Stunden Rühren bei dieser Temperatur, wobei teilweise 0,09 Gew.-% Pentadecylsulfonsäure anwesend sind. Einzelheiten können der folgenden Tabelle 5 entnommen werden. Im übrigen erfolgt die Acetalisierung und Aufarbeitung wie in Beispiel 1 beschrieben. Die erhaltenen Polyvinylbutyrale werden jeweils mit 29 Gew.-% Di-n-hexyladipat weichgemacht und zu 0,8 mm starken Folien verarbeitet. Die Eigenschaften dieser Folien sind in Tabelle 5 beschrieben.

TABELLE 5

| Beispiel 8 | Polymerisat | | | |
|---|---|---|---|---|
| | Vinylacetateinheiten im Ausgangs-PVAl (Gew.-%) | Verwendete Menge n-Butyraldehyd (g/100 gPVAl) | $C_{15}$-Alkansulfonsäure bei Nachbehandlung (Gew.-%, bez. auf PVB) | Vinylalkoholein-heiten im PVB (Gew.-%) |
| a) (erfin-dungsgemäß) | 0 | 60,5 | 0,09 | 19,1 |
| b) (Vergleich) | 1,6 | 59,0 | 0,09 | 19,2 |
| c) (Vergleich) | 1,6 | 60,0 | 0 | 18,7 |

FORTSETZUNG TABELLE 5

| Beispiel 8 | Folie | | | |
|---|---|---|---|---|
| | Schmelzindex [2] $i_{20}$ 80°C (mg/Std.) | Reißfestigkeit [3] (N/mm²) | Festigkeit bei 100% Dehnung [3] (N/mm²) | Folienklebrigkeit [4] (sec.) |
| a) (erfin-dungsgemäß) | 6 | 24,5 | 2,7 | 270 |
| b) (Vergleich) | 260 | 22,5 | 2,1 | 1000 |
| c) (Vergleich) | 1600 | 17,5 | 0,6 | 16000 |

2) Bestimmung nach DIN 53735 bei 80°C unter 21,6 kg Last
3) Bestimmung nach DIN 53455 nach Klimatisierung bei 23°C und 50% rel. Feuchte, Zuggeschwindigkeit 20 cm/Min., Einspannlänge 50 mm, Breite des Meßstreifens 15 mm.
4) Bestimmung nach EP—PS 0000 699, Seite 5.

EP 0 174 480 B1

# EP 0 174 480 B1

## Patentansprüche

1. Verfahren zur Herstellung von thermoplastischen, weichmacherhaltigen Polyvinylbutyral-formmassen durch Acetalisierung von Polyvinylalkohol mit n-Butyraldehyd in wäßriger Phase in Gegenwart eines sauren Katalysators und gegebenenfalls einer emulgierend wirkenden organischen Sulfonsäure sowie Nachbehandlung des Polyvinylbutyrals unter Acetalisierungsbedingungen bei erhöhter Temperatur in Gegenwart einer emulgierend wirkenden Verbindung, Isolierung bzw. Reinigung des Polyvinylbutyrals und gegebenenfalls Zumischen üblicher Zusätze sowie Vermischen des gegebenenfalls getrockneten Produktes mit bis zu 40 Gew.-% Weichmacher, bezogen auf das Polymerisat/ Weichmachergemisch, und Ausformung, dadurch gekennzeichnet, daß zur Acetalisierung ein assoziationsfähiger Polyvinylalkohol, der weniger als 1 Gew.-% Vinylacetateinheiten enthält, in assoziiertem Zustand in wäßriger, fließfähiger Lösung eingesetzt wird und die Acetalisierung in Gegenwart von 0,1 bis 5 Gew.-%, bezogen auf die wäßrige Phase, einer Mineralsäure anfänglich bei einer Temperatur unterhalb von 20°C und später von 20 bis zu 70°C erfolgt, die anschließende Nachbehandlung des Polyvinylbutyrals in Gegenwart einer emulgierend wirkenden organischen Sulfonsäure mit 8 bis 30 C-Atomen oder eines ihrer Salze bei 50 bis 70°C während 0,5 bis 10 Stunden durchgeführt wird, und als Weichmacher

a) ein Ester der Phthalsäure mit einem linearen oder verzweigten $C_6$- bis $C_{10}$-Alkohol oder Gemischen dieser Alkohole und/oder

b) ein Ester der Adipinsäure mit einem linearen oder verzweigten $C_6$- bis $C_{10}$-Alkohol oder Gemischen dieser Alkohole in einer Menge von insgesamt 20 bis 40 Gew.-%, bezogen auf die Mischung, eingesetzt wird.

2. Verfahren nach Anspruch 1, dadurch gekennzeichnet, daß man Polyvinylalkohol mit mehr als 1 Gew.-% Vinylacetateinheiten in wäßriger Lösung bei erhöhter Temperatur zwischen 50 und 100°C mit einer stöchiometrischen Menge Alkali behandelt, bis der gewünschte Gehalt an Vinylacetateinheiten erreicht ist, und den solchermaßen verseiften Polyvinylalkohol in der wäßrigen Lösung in assoziiertem Zustand acetalisiert.

3. Verfahren nach einem der Ansprüche 1 bis 2, dadurch gekennzeichnet, daß der assoziationsfähige Polyvinylalkohol vor der Acetalisierung in den erforderlichen assoziierten Zustand gebracht wird, indem man seine wäßrige Lösung mindestens 10 Minuten auf einer niedrigen Temperatur unterhalb von 40°C hält.

4. Verfahren nach einem der Ansprüche 1 bis 3, dadurch gekennzeichnet, daß das hergestellte Polyvinylbutyral 0 bis 1 Gew.-% Vinylacetateinheiten und 15 bis 21 Gew.-% Vinylalkoholeinheiten enthält und eine Viskosität (gemessen nach DIN 53015 an einer 5 gew.-%igen ethanolischen Lösung bei 23°C) von 10 bis 200 mPa·s aufweist.

5. Verfahren nach einem der Ansprüche 1 bis 4, dadurch gekennzeichnet, daß die Nachbehandlung des Polyvinylbutyrals in Gegenwart von bis zu 1 Gew.-%, bezogen auf Polyvinylbutyral, der emulgierend wirkenden organischen Sulfonsäure durchgeführt wird.

6. Verfahren nach einem der Ansprüche 1 bis 5, dadurch gekennzeichnet, daß das Gewichtsverhältnis der Weichmacherkomponenten a):b) = 100 bis 90:0 bis 10 oder 0 bis 10:100 bis 90 beträgt.

7. Verfahren nach einem der Ansprüche 1 bis 6, dadurch gekennzeichnet, daß die thermoplastische, weichmacherhaltige Polyvinylbutyralformmasse zu einer Folie hoher Festigkeit ausgeformt wird.

8. Verwendung von Polyvinylbutyralfolien, hergestellt nach Anspruch 7, zur Herstellung von Glasverbunden.

9. Glasverbunde, enthaltend Polyvinylbutyralfolie, hergestellt nach Anspruch 7, als Verbundschicht.


## Revendications

1. Procédé de préparation de matières à mouler de polyvinylbutyral thermoplastiques plastifiées par acétalisation d'alcool polyvinylique avec du n-butyraldéhyde en phase aqueuse en présence d'un catalyseur acide et le cas échéant d'un acide sulfonique organique agissant comme émulsionnant, puis traitement du polyvinylbutyral formé dans des conditions d'acétalisation, à chaud et en présence d'un composé émulsionnant, isolement et purification du polyvinylbutyral et le cas échéant addition d'additifs courants, et mélange du produit éventuellement séché avec jusqu'à 40% en poids d'un plastifiant par rapport au mélange du polymère et du plastifiant, puis mise en forme, procédé caractérisé en ce qu'on acétalise un alcool polyvinylique capable d'association, contenant moins de 1% en poids de motifs d'acétate de vinyle (VAC), à l'état associé, en solution aqueuse fluide, et on effectue l'acétalisation en présence de 0,1 à 5% en poids d'un acide minéral par rapport à la phase aqueuse, au début à une température inférieure à 20°C puis entre 20 et 70°C, on traite ensuite le polyvinylbutyral formé en présence d'un acide sulfonique organique en $C_8$ à $C_{30}$ agissant comme émulsionnant, ou d'un sel de cet acide, entre 50 et 70°C pendant une demi- heure à 10 heures, et on utilise comme plastifiants:

a) un ester de l'acide phtalique et d'un alcool linéaire ou ramifié en $C_6$—$C_{10}$ ou de plusieurs de tels alcools, et/ou

b) un ester de l'acide adipique et d'un alcool linéaire ou ramifié en $C_6$—$C_{10}$ ou de plusieurs de ces alcools, dans une proportion totale de 20 à 40% du poids du mélange.

13

# EP 0 174 480 B1

2. Procédé selon la revendication 1 caractérisé en ce que l'on traite un alcool polyvinylique à plus de 1% en poids de motifs d'acétate de vinyle, en solution aqueuse, entre 50 et 100°C, avec une proportion stoechiométrique d'un alcali jusqu'à ce que soit atteinte la teneur voulue en motifs d'acétate de vinyle, puis on acétalise l'alcool polyvinylique ainsi saponifié dans la solution aqueuse, à l'état associé.

3. Procédé selon la revendication 1 ou 2, caractérisé en ce que, avant l'acétalisation, on met à l'état associé nécessaire l'alcool polyvinylique capable d'association en maintenant sa solution aqueuse pendant au moins 10 minutes à une température basse, inférieure à 40°C.

4. Procédé selon l'une des revendications 1 à 3, caractérisé en ce que le polyvinylbutyral obtenu contient de 0 à 1% en poids de motifs d'acétate de vinyle et de 15 à 21% de motifs d'alcool vinylique et a une viscosité de 10 à 200 mPa.s, mesurée suivant la norme allemande DIN 53015 sur une solution éthanolique à 5% en poids à la temperature de 23°C.

5. Procédé selon l'une des revendications 1 à 4, caractérisé en ce que l'on effectue le traitement complémentaire du polyvinylbutyral formé en présence de l'acide sulfonique organique émulsionnant ajouté dans une proportion pouvant s'élever jusqu'à 1% du poids du polyvinylbutyral.

6. Procédé selon l'une des revendications 1 à 5, caractérisé en ce que le rapport pondéral des plastifiants a):b) est de 100 à 90:0 à 10 ou de 0 à 10:100 à 90.

7. Procédé selon l'une des revendications 1 à 6, caractérisé en ce qu'avec le polyvinylbutyral thermoplastique plastifié on forme des feuilles à haute résistance.

8. Emploi des feuilles de polyvinylbutyral formées selon la revendicaton 7 pour la fabrication de verres feuilletés de sécurité.

9. Verres feuilletés comprenant comme couche de liaison une feuille de polyvinylbutyral obtenue suivant la revendication 7.

## Claims

1. A process for the preparation of thermoplastic plasticized polyvinyl butyral molding compositions by acetalization of polyvinyl alcohol with n-butyraldehyde in aqueous phase in the presence of an acid catalyst and, if appropriate, an organic sulfonic acid having an emulsifying action, and aftertreatment of the polyvinyl butyral under acetalization conditions at an elevated temperature in the presence of a compound having an emulsifying action, isolation and/or purification of the polyvinyl butyral and, if appropriate, admixture of conventional additives and mixing of the product, which may have been dried, with up to 40% by weight of plasticizer, relative to the polymer/plasticizer mixture, and molding, which comprises using a polyvinyl alcohol, which contains less than 1% by weight of vinyl acetate units and is capable of association, in the associated state in aqueous flowable solution for the acetalization and performing the acetalization in the presence of 0.1 to 5% by weight, relative to the aqueous phase, of a mineral acid, initially at a temperature below 20°C and later at a temperature from 20 to 70°C, performing the subsequent aftertreatment of the polyvinyl butyral in the presence of an organic sulfonic acid having 8 to 30 carbon atoms and having an emulsifying action, or one of its salts, at 50 to 70°C for 0.5 to 10 hours, and employing as the plasticizer

a) an ester of phthalic acid with a linear or branched $C_6$—$C_{10}$-alcohol or mixtures of these alcohols and/or

b) an ester of adipic acid with a linear or branched $C_6$—$C_{10}$-alcohol or mixtures of these alcohols in a total quantity of 20 to 40% by weight, relative to the mixture.

2. The process as claimed in claim 1, wherein polyvinyl alcohol with more than 1% by weight of vinyl acetate units is treated in aqueous solution at an elevated temperature between 50 and 100°C with a stoichiometric quantity of alkali until the desired vinyl acetate unit content has been reached, and the polyvinyl alcohol thus saponified is acetalized in the associated state in the aqueous solution.

3. The process as claimed in either of claims 1 or 2, wherein the polyvinyl alcohol, capable of association, is brought into the required associated state before the acetalization, by keeping its aqueous solution for at least 10 minutes at a low temperature below 40°C.

4. The process as claimed in any of claims 1 to 3, wherein the polyvinyl butyral prepared contains 0 to 1% by weight of vinyl acetate units and 15 to 21% by weight of vinyl alcohol units and has a viscosity of 10 to 200 mPa·s (measured according to DIN 53015 on a 5% by weight ethanolic solution at 23°C).

5. The process as claimed in any of claims 1 to 4, wherein the aftertreatment of the polyvinyl butyral is carried out in the presence of up to 1% by weight, relative to polyvinyl butyral, of the organic sulfonic acid having an emulsifying action.

6. The process as claimed in any of claims 1 to 5, wherein the weight ratio of the plasticizer components is a):b) = 100 to 90:0 to 10 or 0 to 10:100 to 90.

7. The process as claimed in any of claims 1 to 6, wherein the thermoplastic plasticized polyvinyl butyral molding composition is molded to give a film of high strength.

8. The use of polyvinyl butyral films prepared as claimed in claim 7 for the manufacture of laminated glass.

9. Laminated glass, containing a polyvinyl butyral film, prepared as claimed in claim 7, as the joining layer.

14